# EUROPEAN PATENT APPLICATION

(11) **EP 2 448 129 A2**
(43) Date of publication of application: **02.05.2012**
(21) Application number: 11186097.9
(22) Date of filing: 21.10.2011
(51) Int. Cl.: H04B 1/04, H04W 88/04

(54) **Mobile terminal and communication method**

(30) Priority: 27.10.2010 KR 20100105150
(71) Applicant: Pantech Co., Ltd., Seoul 121-792 (KR)
(72) Inventor: Kim, Jin Woong, 121-792 Seoul (KR); Jung, Min Kyung, 121-792 Seoul (KR)
(74) Representative: Jordan, Volker Otto Wilhelm

(57) **Abstract**

A mobile terminal may use an antenna unit of a second device to transmit and/or receive data. The mobile terminal may allow a second device to use its antenna unit to transmit and/or receive data. The mobile terminal may suspend control of its antenna unit if a second device is transmitting or receiving from the antenna unit. A communication method allows a mobile terminal to use the antenna unit of a second device to transmit and/or receive and the second terminal to use the antenna unit of the mobile terminal to transmit and/or receive.

## Description

### CROSS-REFERENCE TO RELATED APPLICATION

This application claims priority to and the benefit under 35 U.S.C. §119(a) of Korean Patent Application No. 10-2010-0105150, filed on October 27, 2010, which is incorporated by reference for all purposes as if fully set forth herein.

### BACKGROUND

FIELD

This disclosure relates to a mobile terminal to perform communications using an antenna of a second device, and a communication method using the mobile terminal.

DISCUSSION OF THE BACKGROUND

A battery is mounted in a mobile terminal to supply power. The battery may be plate-shaped with a relatively small thickness, and may be joined to a rear side of a main body portion of the mobile terminal so as to be attachable and detachable. The main body portion may also include a unit to control signals and software, and a unit for transmitting and receiving communication signals. If the battery of the mobile terminal is used for a predetermined time after being mounted in the mobile terminal, it may be discharged and thus needs to be recharged. The power used for operation of the mobile terminal is limited depending on the capacity of the battery, and the duration of time for which the user can use the mobile terminal is also limited. With the increased use of mobile devices and the development of related technologies, it has become important to minimize power consumption of components, so that the mobile terminal can be operated for longer time with a limited battery capacity. In addition, it has become important to control the intensity of communication signals of the mobile terminal based on antenna performance and surrounding electric fields in order to provide higher call quality.

### SUMMARY

Exemplary embodiments of the present invention provide a mobile terminal which performs communications using an antenna unit of a second device.

Exemplary embodiments of present invention also provide a communication method for a mobile terminal using an antenna unit of a second device.

Additional features of the invention will be set forth in the description which follows, and in part will be apparent from the description, or may be learned by practice of the invention.

An exemplary embodiment of the present invention discloses a mobile terminal including: an antenna unit including a transmitting unit and a receiving unit; an interface unit to connect to a second device; and a control unit to control the interface unit and to recognize a connection switching request signal, wherein the interface unit connects the antenna unit or the control unit to the second device in response to the recognized connection switching request signal.

An exemplary embodiment of the present invention also discloses a communication method, including: transmitting from a mobile terminal a connection switching request signal to a second device; receiving a response signal corresponding to the connection switching request signal; and switching to use a communication path to an antenna unit of the second device, wherein the antenna unit of the second device includes a transmitting unit or a receiving unit.

An exemplary embodiment of the present invention also discloses a communication method of a mobile terminal, including: receiving a connection switching request signal from a second device; recognizing the connection switching request signal; connecting an antenna unit of the mobile terminal to the second device for communication wherein the antenna unit includes a transmitting unit or a receiving unit; and suspending control of the transmitting unit or the receiving unit connected to the second device.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram of a mobile terminal according to an exemplary embodiment.

FIG. 2 is a diagram of a mobile terminal, which communicates with a second device according to an exemplary embodiment.

FIG. 3A is a diagram of interface units according to an exemplary embodiment.

FIG. 3B is a diagram of interface units according to an exemplary embodiment.

FIG. 3C is a diagram of interface units according to an exemplary embodiment.

FIG. 3D is a diagram of interface units according to an exemplary embodiment.

FIG. 4 is a diagram illustrating mobile terminals communicating with each other using human body communication according to an exemplary embodiment.

FIG. 5 is a diagram of a method for communication that recognizes an internally generated connection switching request signal according to an exemplary embodiment.

FIG. 6 is a diagram of a method for communication that recognizes an externally generated connection switching request signal according to an exemplary embodiment.

### DETAILED DESCRIPTION

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a," "an" and "the" are intended to include the plural forms as well, unless the context clearly indicates otherwise. Furthermore, the use of the terms a, an, etc. does not denote a limitation of quantity, but rather denotes the presence of at least one of the referenced item. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention. In the drawings, like reference numerals denote like elements. The shape, size and regions, and the like, of the drawing may be exaggerated for clarity.

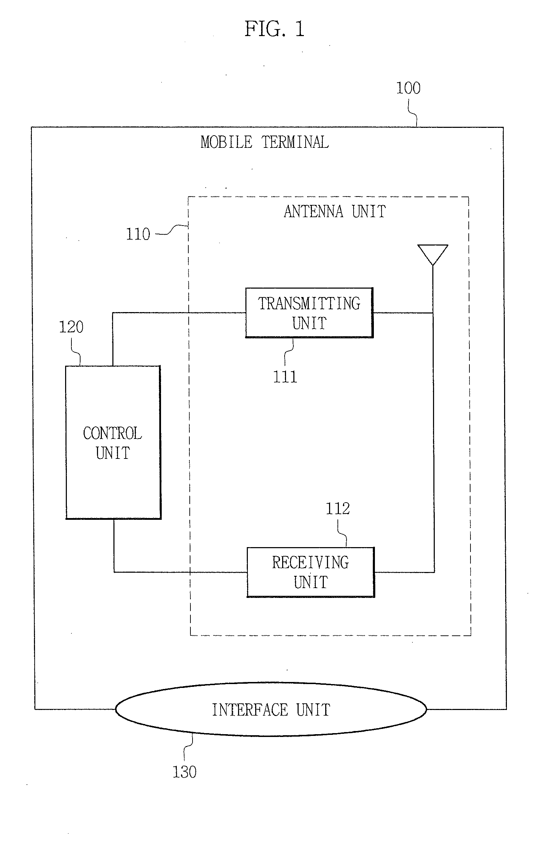

FIG. 1 is a diagram of a mobile terminal according to an exemplary embodiment.

Referring to FIG. 1, a mobile terminal 100 according to an exemplary embodiment may include an antenna unit 110, a control unit 120, and an interface unit 130. The components illustrated in FIG. 1 are not necessarily required, and additional components may also be included.

The antenna unit 110 may include a transmitting unit 111 and a receiving unit 112. The transmitting unit 111 may be as a transmission circuit Tx to transmit communication signals, and may include a transmission path and a power amplifier (PA) for amplifying signals to be transmitted. The receiving unit 112 may be as a reception circuit Rx for receiving communication signals, and may include a reception path and a low-noise amplifier (LNA) to remove noise from received signals.

The control unit 120 controls the operation of the mobile terminal 100. The control unit 120 recognizes a connection switching request signal generated either internally by the mobile terminal 100 or externally and controls the interface unit 130. If the control unit 120 recognizes a connection switching request signal generated internally by the mobile terminal 100, the control unit 120 controls the interface unit 130 to connect the mobile terminal 100 to an antenna unit of a second device. The second device may be any antenna device, e.g., an antenna having a transmission circuit Tx with a communication path and a power amplifier, a reception circuit Rx with a reception path and a low-noise amplifier (e.g., master antennas, routers, access points, etc.), mobile terminals, etc. The connection for communication may be a direct or indirect connection that enables transmission of a signal from the mobile terminal 100 to the second device and transmission of a signal from the second device to the mobile terminal 100.

If the connection switching request signal is internally generated by the mobile terminal 100, the control unit 120 connects to the antenna unit of the second device to transmit a signal via a transmission circuit of the second device or to receive a signal via a reception circuit of the second device. If the control unit 120 recognizes a connection switching request signal generated externally, for example by the second device, etc., the control unit 120 may control the interface unit 130 to connect the antenna unit 110 of the mobile terminal 100 to the second device for communication. In other words, the control unit 120 controls the antenna unit of the mobile terminal 100 to connect to a control unit of the second device for communication, thereby allowing the second device to transmit a signal via the transmitting unit of the mobile terminal 100 or to receive a signal via the receiving unit of the mobile terminal 100.

Specifically, if the control unit 120 receives a connection switching request signal, which is externally generated, to connect to the transmitting unit 111, the control unit 120 connects the transmitting unit 111 to the second device via the interface unit 130, and suspends control of the transmitting unit 111. Thus, the transmitting unit 111 transmits a signal only for the second device. If the control unit 120 recognizes a connection switching request signal, which is externally generated, to connect to the receiving unit 112, the control unit 120 connects the receiving unit 112 to the second device via the interface unit 130 and sets the receiving unit 112 of the mobile terminal to an "offline" state in which the mobile terminal 100 does not receive signals via the receiving unit 112.

In an exemplary embodiment, the control unit 120 may turn off power to other components whose processes are suspended in the new connection arrangement, thereby reducing the power consumption of the mobile terminal 100. In an exemplary embodiment, the control unit 120 may automatically generate and recognize a connection switching request signal before performing a process or while performing a process. By way of example, a power supply unit to supply power for the operations of the mobile terminal 100 may be included in the mobile terminal 100. If an amount power of the power supply unit decreases to or below a threshold value, while the mobile terminal 100 is in a reception waiting state or during a call, the control unit 120 may automatically generate the connection switching request signal and control the interface 130 to connect to the antenna unit of the second device, in order to reduce power consumed by the mobile terminal 100. In an exemplary embodiment, if the mobile terminal 100 is positioned in an environment in which the communication efficiency of the antenna unit 110 decreases to or below a threshold value, the control unit may automatically generate the connection switching request signal and control the interface unit 130 to connect to the antenna unit of the second device, in order to increase the communication efficiency of the mobile terminal 100. In an exemplary embodiment, the second device may have a higher communication efficiency than the mobile terminal.

The interface unit 130 may switch the communication path of the mobile terminal 100 in response to the connection switching request signal of the control unit 120. In an exemplary embodiment, the interface unit 130 switches the communication path to use an antenna unit of a second device instead of a connection path between the antenna unit 110 and the control unit 120. In an exemplary embodiment, the interface unit 130 switches the communication path to allow the second device to use the antenna unit 110 of the mobile terminal 100. The interface unit 130 may use human body communication or wired/wireless communications, such as Wi-Fi®, Bluetooth®, cables, etc.

In an exemplary embodiment, the antenna unit of the second device is used by the mobile terminal 100 and the control unit 120 may control the antenna unit of the second device via the interface unit 130 for communication, the antenna of the second device may receive a broadcast signal, for example a digital multimedia broadcasting (DMB) signal. The antenna unit of the second device may amplify the broadcast signal and transmit the broadcast signal to the mobile terminal 100. The mobile terminal 100 may output the broadcast signal to a display unit. In other words, if a communication path of a mobile terminal to a second device is established, and if the mobile terminal selects broadcast signal watching, the second device receives and amplifies the broadcast signal, instead of the mobile terminal 100, and transmits the broadcast signal to the mobile terminal 100.

In addition, if the control unit 120 connects to the antenna unit of the second device by the interface unit 130, the control unit may encode input sound and/or image information and transmit the sound and/or image information via the antenna unit of the second device, and may decode sound and/or image information received via the antenna unit of the second device and output the sound and/or image information. In an exemplary embodiment, the input sound and/or image information may be received directly by components of the mobile terminal 100 (e.g., microphones, camera, etc.) or from other devices. In other words, if a communication path of a mobile terminal to a second device is established, the mobile terminal may encode sound and/or image information input by a user and transmit the sound and/or image information to the second device so as to transmit it via the transmitting unit of the second device. In addition, the second device may transmit the sound and/or image information received by the receiving unit of the second device to the mobile terminal 100, and the mobile terminal 100 may decode the information and output the result.

In an exemplary embodiment, the control unit 120 may be connected to the antenna unit of the second device via the interface unit 130 to transmit a data request signal via the antenna unit of the second device and may output data packets received from the antenna unit of the second device. In other words, if a communication path of a mobile terminal to a second device is established, the second device receive data, for connecting a data call, from the mobile terminal and transmit the data to a base station, and the second device may transmit data received from the base station to the mobile terminal 100, to connect the data call. If a data call is established, the second device may exchange data packets with the base station, the second device may transmit the received data packets to the mobile terminal, and the mobile terminal may display an application using the received data packets. In an exemplary embodiment, if the second device receives data packets transmitted from the mobile terminal, the second device may transmit the received data packets to the base station.

In an exemplary embodiment, the control unit 120 is connected to the antenna unit of the second device via the interface unit 130 to transmit location status information about the mobile terminal 100 via the antenna unit of the second device. The control unit 120 may receive additional information depending on the location status information of the mobile terminal 100 via the antenna unit of the second device, and may display an augmented reality obtained by adding the received additional information to the information displayed on a display unit of the mobile terminal 100. In other words, the mobile terminal 100 may transmits information about a current location, a direction in which the mobile terminal is facing, an inclined angle, etc., to the second device, and the second device transmits the received information to a location-based information system and receives additional information from the location-based information system. The second device transmits the received additional information to the mobile terminal 100, and the mobile terminal 100 then combines camera information with the additional information and displays the combined information as an augmented reality on the display unit.

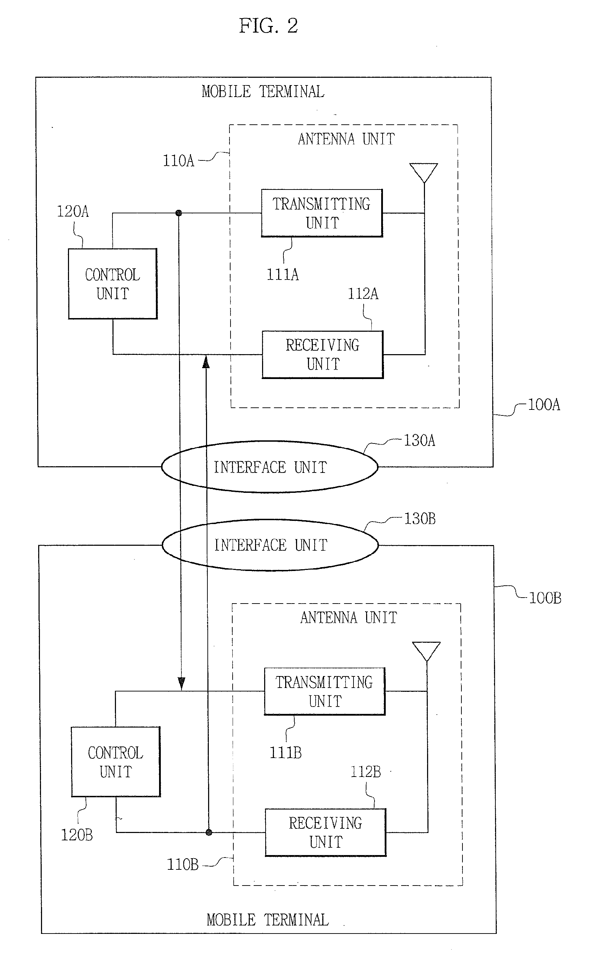

FIG. 2 is a diagram of a mobile terminal, which communicates with a second device according to an exemplary embodiment.

A mobile terminal 100A may include an antenna unit 110A, a control unit 120A, and an interface unit 130A. Second device 100B, which may be a mobile terminal, may include an antenna unit 110B, a control unit 120B, and an interface unit 130B. In an exemplary embodiment, the control unit 120A of the mobile terminal 100A may be connected to the antenna unit 110B of the second device 100B for communication, and the antenna unit 110A of the mobile terminal 100A may be connected to the control unit 120B of the second device 100B for communication. In addition, the control unit 120A of the mobile terminal 100A may be connected to a transmitting unit 111B and/or a receiving unit 112B of the second device 100B, and a transmitting unit 111A and/or a receiving unit 112A of the mobile terminal 100A may be connected to the control unit 120B of the second device 100B for communication.

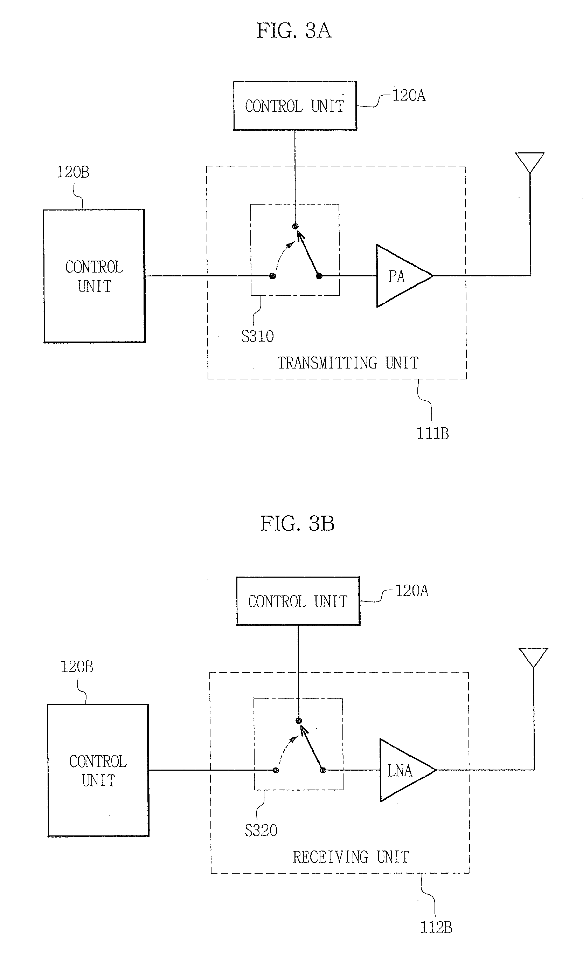

FIG. 3A is a diagram of interface units according to an exemplary embodiment.

Referring to FIG. 3A, a communication path between the transmitting unit 111B of the second device 100B and the control unit 120A of the mobile terminal 100A is depicted. In particular, the transmitting unit 111B switches a connection path in response to a request S310 from the control unit 120A to allow the control unit 120A of the mobile terminal 100A to transmit a signal via the transmitting unit 111B of the second device 100B.

FIG. 3B is a diagram of interface units according to an exemplary embodiment.

Referring to FIG. 3B, a communication path between the receiving unit 112B of the second device 100B and the control unit 120A of the mobile terminal 100A is depicted. The receiving unit 112B of the second device 100B is initially connected to the control unit 120B of the second device 100B. The receiving unit 112B switches a connection path in response to a request S320 of the control unit 120A to allow the control unit 120A of the mobile terminal 100A to receive a signal via the receiving unit 112B of the second device 100B.

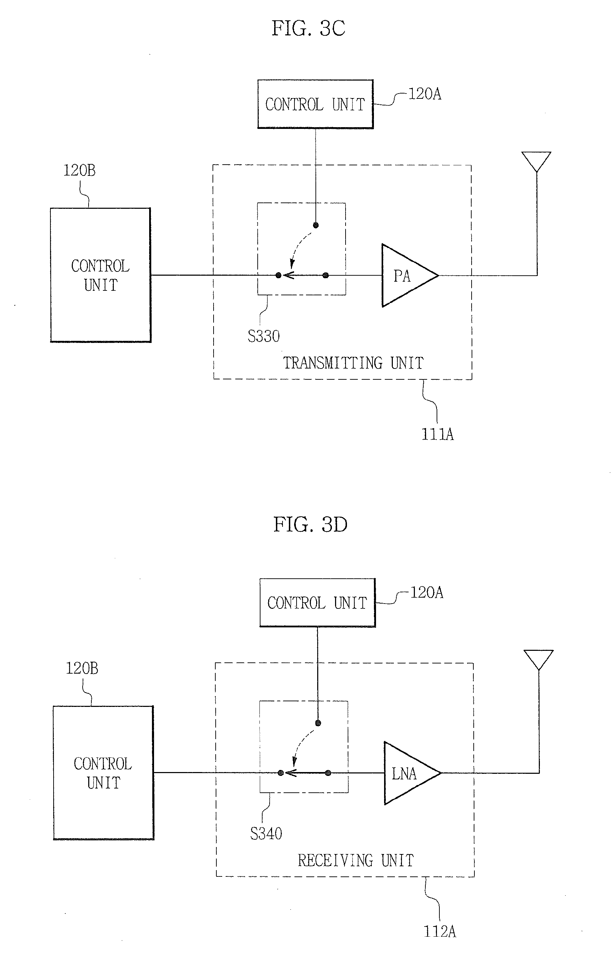

FIG. 3C is a diagram of interface units according to an exemplary embodiment.

Referring to FIG. 3C, a communication path between the transmitting unit 111A of the mobile terminal and the control unit 120B of the second device 100B is depicted. In particular, the transmitting unit 111A switches a connection path in response to a request S330 from the second device 100B to allow the control unit 120B of the second device 100B to transmit a signal via the transmitting unit 111A of the mobile terminal 100A.

FIG. 3D is a diagram of interface units according to an exemplary embodiment.

Referring to FIG. 3D, a communication path between the receiving unit 112A of the mobile terminal 100A and the control unit 120B of the second device 100B is depicted. The receiving unit 112A of the mobile terminal 100A is initially connected to the control unit 120A of the mobile terminal 100A. The receiving unit 112A switches a connection path in response to a request S340 of the second device 100B to allow the control unit 120B of the second device 100B to receive a signal via the receiving unit 112A of the mobile terminal 100A.

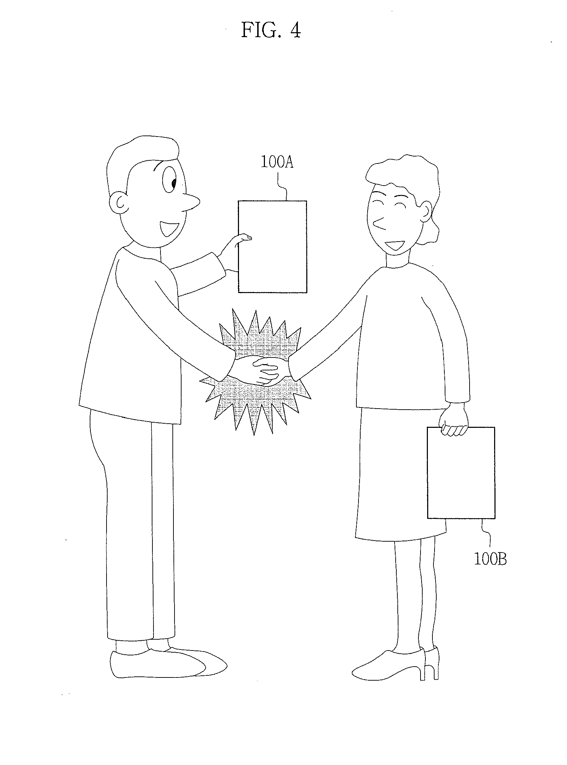

FIG. 4 is a diagram illustrating mobile terminals communicating with each other using human body communication according to an exemplary embodiment.

Referring to FIG. 4, a mobile terminal 100A communicates with another mobile terminal 100B, which is a second device, through human body communication. If human body communication is used as described above, communications can be performed without additional equipment or settings. The human body communication interface may be replaced with wired and/or wireless communications, such as Wi-Fi®, Bluetooth®, cables, etc.

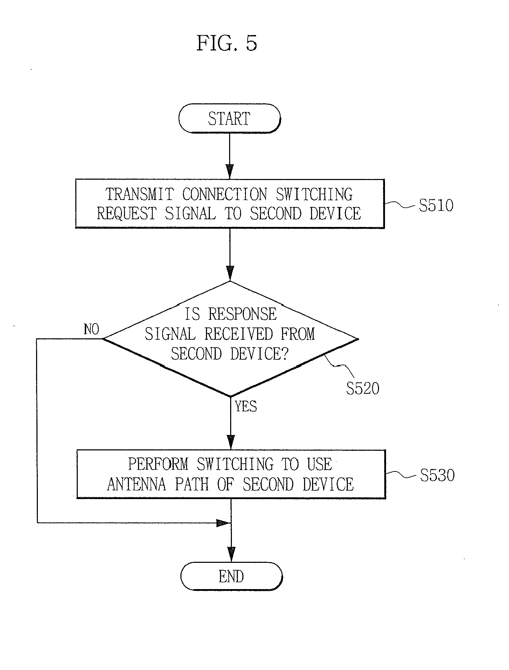

FIG. 5 is a diagram of a communication method that recognizes an internally generated connection switching request signal according to an exemplary embodiment.

Referring to FIG. 5, in operation S510 a mobile terminal transmits to second device a connection switching request signal to request use of a transmitting unit or a receiving unit of the second device. In operation, S520, the mobile terminal determines whether a response signal is received from the second device allowing or disallowing the requested connection. If the response signal is received and allows the connection, in operation 530, the mobile terminal switches to use a connection path to the antenna unit of the second device, and the mobile terminal transmits or receives signals using the antenna unit of the second device. In an exemplary embodiment, power consumption may be reduced by turning off power supplied to the transmitting unit or the receiving unit of the antenna unit of the mobile terminal. In addition, the mobile terminal may be set to automatically transmit the connection switching request signal if the battery of the mobile terminal has insufficient power or the antenna performance is poor.

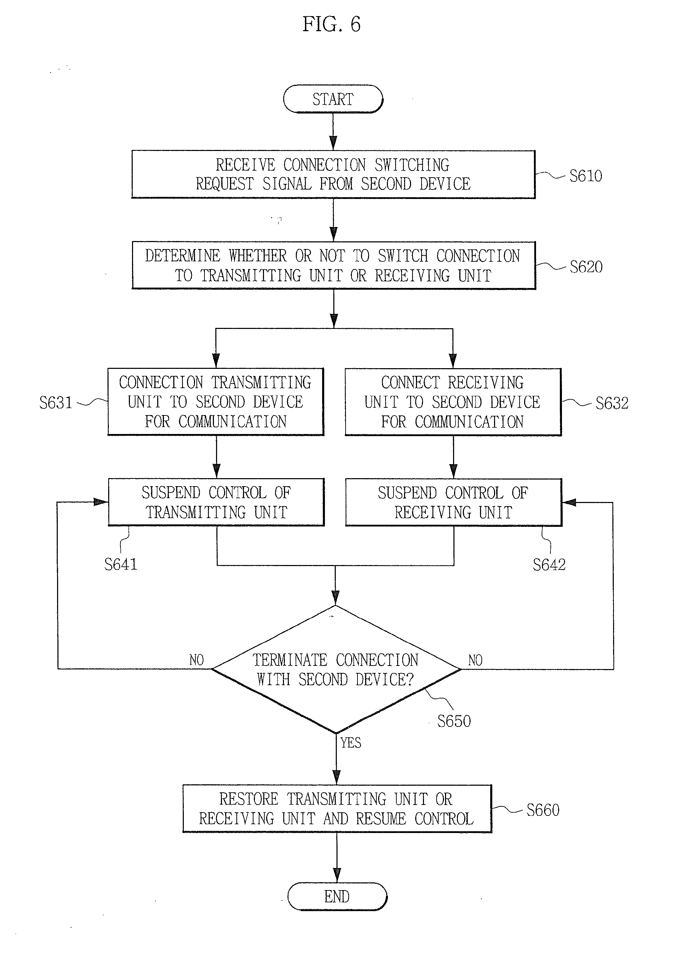

FIG. 6 is a diagram of a communication method that recognizes an externally generated connection switching request signal according to an exemplary embodiment.

Referring to FIG. 6, in operation S610, a connection switching request signal is received by a mobile terminal from a second device. In operation S620, the mobile terminal recognizes the connection switching request signal and connects an antenna, including a transmitting unit and/or a receiving unit, to the second device for communication. Specifically, the mobile terminal determines which type of connection switching request signal is received in operation S610. If it is determined that the type of connection switching request is a communication connection signal for connecting to the transmitting unit, the transmitting unit is connected to the second device for communication in operation S631. In operation S641, control of the transmitting unit is suspended by the mobile terminal. If it is determined that the type of connection switching request is a communication connection signal for connecting to the receiving unit, the receiving unit is connected to the second device for communication in operation S632. In operation S642, control of the receiving unit is suspended by the mobile terminal, for example, by setting the receiving unit to an "offline" state. In an exemplary embodiment, if the connection switching request signal is determined to contain a request to connect to both the transmitting unit and the receiving unit, the mobile terminal may be set to simultaneously perform operations S631 and S632 and subsequent operations S641 and S642 in response to the connection switching request signal. In operation S650 the second device determines whether to terminate communication using the transmitting unit and/or the receiving unit of the mobile terminal. If, in operation S650, a determination to terminate the connection is made, in operation S660, the mobile terminal terminates communication between the control unit of the second device and the transmitting unit and/or the receiving unit, restores the connection of the transmitting unit and/or the receiving unit to the mobile terminal, and resumes the suspended control. If, in operation S650, it is determined to not terminate the connection, the mobile terminal takes no action and the mobile terminal continues to suspend control of the transmitting unit and/or the receiving unit. Although not shown in FIG. 6, the mobile terminal may determine whether to allow connection of the second device and/or determine whether to terminate the connection with the second device.

In the mobile terminal and the communication method of the mobile terminal, power consumption of the mobile terminal may be reduced by using the antenna unit of the second device which includes a transmitting unit and/or a receiving unit. Such communication may be performed without incurring increased charges for the second device. In addition, since signals are exchanged using the antenna unit of the second device, the impact of wireless signals on the human body may be decreased, and transceiving efficiency may be increased by improving antenna performance.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A mobile terminal may use an antenna unit of a second device to transmit and/or receive data. The mobile terminal may allow a second device to use its antenna unit to transmit and/or receive data. The mobile terminal may suspend control of its antenna unit if a second device is transmitting or receiving from the antenna unit. A communication method allows a mobile terminal to use the antenna unit of a second device to transmit and/or receive and the second terminal to use the antenna unit of the mobile terminal to transmit and/or receive.

## Claims

1. A mobile terminal, comprising:
an antenna unit comprising a transmitting unit and a receiving unit;
an interface unit to connect to a second device; and
a control unit to control the interface unit and to recognize a connection switching request signal, wherein the interface unit connects the antenna unit or the control unit to the second device in response to the recognized connection switching request signal.

2. The mobile terminal of claim 1, wherein the interface unit connects the control unit to an antenna unit of the second device, if the control unit recognizes the connection switching request signal as generated internally.

3. The mobile terminal of claim 1, wherein the interface unit connects the antenna unit to the second device, if the control unit recognizes the connection switching request signal as received from the second device, wherein the interface unit preferably connects the transmitting unit to the second device, if the control unit recognizes the connection switching request signal as a signal for connecting to the transmitting unit, and wherein the control unit preferably suspends control of the transmitting unit.

4. The mobile terminal of claim 1, wherein the interface unit connects the receiving unit to the second device for communication, if the control unit recognizes the connection switching request signal as a signal for connecting to the receiving unit,
wherein the control unit preferably sets the receiving unit to an offline state.

5. The mobile terminal of claim 1, further comprising:
a power supply unit to supply power,
wherein the control unit controls the interface unit to connect the control unit to an antenna unit of the second device, if an amount of power of the power supply unit decreases to or below a threshold value.

6. The mobile terminal of claim 1, wherein the control unit controls the interface unit to connect the control unit to an antenna unit of the second device for communication if a communication efficiency of the antenna unit decreases to or below a threshold value.

7. The mobile terminal of one of claims 1 to 6, wherein the interface unit communicates via a human body communication, wired communication or wireless communication.

8. The mobile terminal of one of claims 1 to 7, further comprises:
a display unit to display,
wherein if the control unit connects to an antenna unit of the second device via the interface unit, the mobile terminal receives a broadcast signal amplified by an antenna unit of the second device to be displayed on the display unit.

9. The mobile terminal of claim 1, wherein, if the control unit connects to an antenna unit of the second device for communication via the interface unit, the control unit encodes input sound and/or image information, and transmits the encoded information via the antenna unit of the second device,
wherein the control unit preferably decodes sound and/or image information received via the antenna unit of the second device and outputs the decoded information.

10. The mobile terminal of claim 1, wherein, if the control unit connects to an antenna unit of the second device for communication via the interface unit, the control unit transmits a data request signal via the antenna unit of the second device, and outputs data packets received via the antenna unit of the second device.

11. The mobile terminal of claim 1, wherein, if the control unit connects the control unit to an antenna unit of the second device via the interface unit, the control unit transmits location status information about the mobile terminal via the antenna unit of the second device.

12. The mobile terminal of claim 11, wherein the control unit receives additional information based on the transmitted location status information via the antenna unit of the second device to be displayed as an augmented reality.

13. A communication method, comprising:
transmitting from a mobile terminal a connection switching request signal to a second device,
receiving a response signal corresponding to the connection switching request signal; and
switching to use a communication path to an antenna unit of the second device,
wherein the antenna unit of the second device comprises a transmitting unit and/or a receiving unit.

14. A communication method of a mobile terminal, the method comprising:
receiving a connection switching request signal from a second device;
recognizing the connection switching request signal;
connecting an antenna unit of the mobile terminal to the second device for communication, wherein the antenna unit comprises a transmitting unit and/or a receiving unit; and
suspending control of the transmitting unit or the receiving unit connected to the second device.

15. The communication method of claim 14, wherein the method further comprises:
if communication with the second device is terminated, restoring the antenna unit of the mobile terminal to an original state of the antenna unit, and resuming control of the transmitting unit and/or the receiving unit.
